# EUROPÄISCHE PATENTANMELDUNG

(11) **EP 2 767 753 A1**
(43) Veröffentlichungstag der Anmeldung: **20.08.2014**
(21) Anmeldenummer: 13155580.7
(22) Anmeldetag: 18.02.2013
(51) Int. Cl.: F21V 8/00

(54) **Auf der Basis von Leuchtdioden-Chips arbeitendes Lichtpanel**

(71) Anmelder: LD Lichtdominanz GmbH, 47839 Krefeld (DE)
(72) Erfinder: Wustlich, Hans-Dieter, 47475 Kamp-Lintfort (DE)
(74) Vertreter: Müller, Karl-Ernst

(57) **Zusammenfassung**

Ein Lichtpanel mit einem plattenförmigen, aus einem transparenten lichtdurchlässigen Material bestehenden Körper (12), bei welchem an wenigstens einer Randfläche des plattenförmigen Körpers (12) eine Platine (13) mit einer Mehrzahl von darauf angeordneten und entsprechend verschalteten Leuchtdioden-Chips (14) derart angeordnet ist, dass die Leuchtdioden-Chips (14) das von ihnen erzeugte Licht seitlich in den plattenförmigen Körper (12) einstrahlen, ist dadurch gekennzeichnet, die Platine (13) zwischen der Randfläche des plattenförmigen Körpers (12) und einem den plattenförmigen Körper (12) umlaufend umschließenden, aus einem lichtundurchlässigen Material bestehenden Rahmenprofil (10) angeordnet ist, welches den plattenförmigen Körper (12) an dessen sichtbarer, lichtabsirahlender Oberfläche mit einem darauf aufliegenden Halteschenkel (17) übergreift, wobei der plattenförmige Körper (12) auf seiner der lichtabstrahlenden Oberfläche gegenüberiiegenden Seite von einer von einem Schenkel (21) des Rahmenprofils (10) gehaltenen Bodenplatte (20) festgelegt ist und zwischen dem plattenförmigen Körper (12) und der Bodenplatte (20) eine den plattenformigen Körper (12) gegen die Bodenplatte (20) abschirmende lichtundurchlässige Sperrfolie (18) und zwischen der Sperrfolie (18) und der Bodenplatte (20) eine Schicht aus Dämpfungsmaterial (19) angeordnet sind und dass zwischen der Platine (13) und dem plattenförmigen Körper (12) Abstandsstege (25) einer mindestens der Höhe der auf der Platine (13) aufgebrachten Leuchtdioden-Chips (14) entsprechende Länge angeordnet sind.

## Beschreibung

Die Erfindung betrifft ein Lichtpanel mit einem plattenförmigen, aus einem transparenten lichtdurchlässigen Material bestehenden Körper, bei welchem an wenigstens einer Randfläche des plattenförmigen Körpers eine Platine mit einer Mehrzahl von darauf angeordneten und entsprechend verschalteten Leuchtdioden-Chips derart angeordnet ist, dass die Leuchtdioden-Chips das von ihnen erzeugte Licht seitlich in den plattenförmigen Körper einstrahlen.

Ein Lichtpanel mit den vorgenannten, gattungsgemäßen Merkmalen ist aus der DE 39 14 448 C2 bekannt. Die darin beschriebene Anordnung zur Ausleuchtung von Hintergrundflächen besteht aus einem plattenförmigen Bauteil, bei welchem in wenigstens einer Randfläche eine Ausnehmung zur Aufnahme einer mit Leuchtdioden-Chips bestückten Platine als Trägerkörper ausgebildet ist, wobei die Leuchtdioden-Chips bei in die Ausnehmung des plattenartigen Körpers eingeschobener Platine seitlich in das aus einem transparenten, lichtdurchlässigen Material bestehende plattenförmige Bauteil einstrahlen, so dass dadurch das plattenförmige Bauteil ausgeleuchtet wird, welches damit insbesondere als Flächendisplay zur Hintergrundbeleuchtung geeignet ist und auch entsprechend eingesetzt werden soll.

Soweit im Zuge der Entwicklung der Beleuchtungstechnik auf der Basis von Leuchtdioden-Chips immer lichtstärkere Einheiten möglich geworden sind, werden derartige, mit Hilfe von Leuchtdioden-Chips ausgeleuchtete plattenförmige Körper auch zur Raumbeleuchtung eingesetzt, womit die Forderung einhergeht, derartige größere Abmessungen aufweisende plattenförmige Körper in Form von standardisierbaren Bauelementen handhabbar zu machen und auch eine einfache Herstellung derartiger Bauelemente zu ermöglichen.

Der Erfindung liegt daher die Aufgabe zugrunde, ein die eingangs genannten Merkmale aufweisendes Lichtpanel zur Verfügung zu stellen, welches als ein einheitliches Beleuchtungs-Bauelement handhabbar und einsetzbar ist und welches einfach herzustellen ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Platine zwischen der Randfläche des plattenförmigen Körpers und einem den plattenförmigen Körper umlaufend umschließenden, aus einem lichtundurchlässigen Material bestehenden Rahmenprofil angeordnet ist, welches den plattenförmigen Körper an dessen sichtbarer, lichtabstrahlender Oberfläche mit einem darauf aufliegenden Halteschenkel übergreift, wobei der plattenförmige Körper auf seiner der lichtabstrahlenden Oberfläche gegenüberliegenden Seite von einer von einem Schenkel des Rahmenprofils gehaltenen Bodenplatte festgelegt ist und zwischen dem plattenförmigen Körper und der Bodenplatte eine den plattenförmigen Körper gegen die Bodenplatte abschirmende lichtundurchlässige Sperrfolie und zwischen der Sperrfolie und der Bodenplatte eine Schicht aus Dämpfungsmaterial angeordnet sind und dass zwischen der Platine und dem plattenförmigen Körper Abstandsstege mit einer mindestens der Höhe der auf der Platine aufgebrachten Leuchtdioden-Chips entsprechende Länge angeordnet sind.

Das erfindungsgemäße Lichtpanel weist somit zunächst einen den mittels Leuchtdioden-Chips ausgeleuchteten plattenförmiger Körper fest umschließenden Rahmen auf, so dass die Lichtpanele als Beleuchtungs-Bauelemente einzeln handhabbar sind. Dabei ist der Rahmen derart ausgebildet, dass er den plattenförmigen Körper auf dessen Unterseite mittels einer Bodenplatte hält und den plattenförmigen Körper auf dessen oberer, lichtabstrahlenden Fläche mit einem in Form eines Halteschenkels umgebogenen Rahmenteil übergreift, so dass der plattenförmige Körper zwischen dem Halteschenkel und der Bodenplatte eingeklemmt ist. Auf seiner Unterseite ist der plattenförmige Körper mittels einer zwischen dem plattenförmigen Körper und der Bodenplatte angeordneten lichtundurchlässigen Sperrfolie belegt, so dass hier kein Licht austritt und damit kein Lichtverlust eintreten kann. Vielmehr wird das von den Leuchtdioden-Chips in den plattenförmigen Körper eingestrahlte Licht von der Sperrfolie in den plattenförmigen Körper zurückreflektiert. Um eine Bewegung des plattenförmigen Körpers in dem Rahmen während der Handhabung des Lichtpanels zu verhindern, ist zusätzlich zwischen der Sperrfolie und der Bodenplatte eine Schaumstoffschicht als Dämpfungsmaterial angeordnet. Soweit die Platine mit den darauf angebrachten Leuchtdioden-Chips entsprechend dem Stand der Technik parallel zu einer Randfläche des plattenförmigen Körpers angeordnet ist, ist die Platine aus Montagegründen nicht in dem plattenförmigen Körper selbst eingelegt, sondern an der Innenseite des Rahmens gehalten und somit getrennt von dem plattenförmigen Körper angeordnet. Damit bei einer senkrechten Anbringung des Lichtpanels der plattenförmige Körper aufgrund seines Eigengewichts die auf der jeweils unterhalb von ihm gelegenen Platine angebrachten Leuchtdioden-Chips nicht beschädigt, ist vorgesehen, dass zwischen der Platine und dem plattenförmigen Körper Abstandsstege angeordnet sind, deren Abmessung mindestens der Höhe der auf der Platine aufgebrachten Leuchtdioden-Chips entspricht. Damit ist der plattenförmige Körper gegenüber der Platine unverschiebbar festgelegt, und eine Beschädigung der Leuchtdioden-Chips durch den plattenförmigen Körper ist nicht möglich.

Bevorzugt sind die Abstandsstege auf der Platine jeweils zwischen den reihenartig angeordneten Leuchtdioden-Chips angeordnet, so dass im Regelfall jeder Leuchtdioden-Chip durch zwei ihn einrahmende, den plattenförmigen Körper von einem Kontakt mit den Leuchtdioden-Chips abhaltende Abstandsstege geschützt ist. Es ist aber auch nicht ausgeschlossen, dass die Abstandsstege in einer beliebigen, geeigneten Anordnung auf der Platine verteilt sind.

Nach einem Ausführungsbeispiel der Erfindung ist vorgesehen, dass das Rahmenprofil ein C-Profil ist und die einander gegenüberliegenden Halteschenkel des C-Profils einerseits die Bodenplatte und andererseits den plattenförmigen Körper zwischen sich aufnehmen und halten.

Im Rahmen eines dergestalt ausgebildeten Rahmenprofils kann vorgesehen sein, dass die Platine auf der Innenseite des C-förmigen Rahmenprofils angebracht ist.

Soweit es bei dem Betrieb der Leuchtdioden-Chips durchaus zu einer gewissen Wärmeentwicklung auf der Platine kommt, ist nach einem Ausführungsbeispiel der Erfindung vorgesehen, dass die Platine mittels einer wärmeleitfähigen, vorzugsweise als Doppelklebefolie ausgebildeten Klebefolie auf die Innenseite des C-förmigen Rahmenprofils aufgeklebt ist; hiermit ist erreicht, dass eine eventuell an der Platine entstehende Wärme über die Klebefolie auf das äußere Rahmenprofil abgeleitet wird.

Nach alternativen Ausführungsbeispielen der Erfindung kann in Abhängigkeit von den Abmessungen des Lichtpanels vorgesehen sein, dass an zwei einander gegenüberliegenden Randflächen oder auch an allen vier Randflächen eines rechteckigen plattenförmigen Körpers jeweils eine Platine mit seitlich in den plattenförmigen Körper einstrahlenden Leuchtdioden-Chips angeordnet ist.

Zur Sicherung einer Homogenität der Lichteinstrahlung kann in einer grundsätzlich im Stand der Technik bekannten Weise vorgesehen sein, dass die sichtbare lichtabstrahlende Oberfläche des plattenförmigen Körpers mit einer eine Prismenstruktur aufweisenden Lentikularfolie belegt ist. Der Effekt der auf die lichtabstrahlende Oberfläche aufgebrachten Folie kann dadurch verbessert werden, dass zwei Lentikularfolien mit gleicher Prismenstruktur, jedoch um einen Winkel versetzt zueinander aufeinander gelegt sind.

Nach einem Ausführungsbeispiel der Erfindung ist vorgesehen, dass auf der Platine zusätzlich zu den Leuchtdioden-Chips wenigstens eine damit verschaltete und an eine Stromversorgung angeschlossene Stromquelle angeordnet ist; auf diese Weise ist es möglich, die Leuchtdioden-Chips unabhängig von Schwankungen bei der Stromversorgung immer mit einem gleichen definierten Strom zu fahren, um jeweils eine gleiche Lichtabstrahlung des von den Leuchtdioden-Chips ausgeleuchteten plattenförmigen Körpers sicherzustellen. Vorzugsweise ist jeweils beispielsweise eine Gruppe von sechs Leuchtdioden-Chips an eine Stromquelle angeschlossen, so dass gegebenenfalls je nach der Anzahl der auf einer Platine angeordneten Leuchtdioden-Chips auch mehrere Stromquellen auf der Platine angeordnet sein können.

Nach einem Ausführungsbeispiel der Erfindung ist vorgesehen, auf den Platinen insbesondere ein Weißlicht erzeugende Leuchtdioden-Chips anzuordnen. Soweit in der Beleuchtungstechnik unterschiedliche Weißtöne gängig sind, ist nach einem Ausführungsbeispiel der Erfindung vorgesehen, dass auf jeweils einer Platine verschiedene, jeweils ein Weißlicht mit unterschiedlichen Farbtemperaturen erzeugende Leuchtdioden-Chips angeordnet sind, wobei im Besonderen Leuchtdioden-Chips zur Erzeugung eines Weißlichts mit 2900 K sowie zur Erzeugung eines Weißlichts mit 6500 K in einer entsprechend festgelegten Verteilung beziehungsweise Abfolge auf der Platine angeordnet sind. Mit einer derartigen Anordnung lassen sich Weißtöne entsprechend einer Farbtemperatur von 2900 K beziehungsweise 6500 K, jedoch nach einem Ausführungsbeispiel der Erfindung aufgrund der Anordnung eines zusätzlichen Steuermoduls auch Weißtöne mit einer anderen Farbtemperatur, vorzugsweise mit einer Farbtemperatur von 4000 K erzeugen, indem das von den unterschiedlichen, einen verschiedenen Weißton erzeugenden Lichtdioden-Chips abgegebene Licht zu einem entsprechenden Weiß-Mischlicht gemischt wird.

Erfindungsgemäß kann auch vorgesehen sein, dass auf einer Platine eine Mischung von jeweils Licht in unterschiedlichen Farben erzeugende und mittels eines Steuermoduls ansteuerbare Leuchtdioden-Chips (R-G-B-Chips) angeordnet sind, so dass auch ein entsprechend farbiges Licht abgebende Lichtpanels herstellbar sind.

Es kann vorgesehen sein, dass der plattenförmige Körper aus Acryl mit in an sich bekannter Weise darin verteilt eingelagerten Streuzentren besteht, womit die Homogenität des von dem plattenförmigen Körper abgestrahlten Lichts verbessert ist.

In der Zeichnung ist ein Ausführungsbeispiel der Erfindung wiedergegeben, welches nachstehend beschrieben ist. Es zeigen:
- Fig. 1: einen randseitigen Teilbereich eines erfindungsgemäßen Lichtpanels während der Montage des Lichtpanels,
- Fig. 2: die Einzelheit "X" aus Figur 1 in einer vergrößerten Darstellung,
- Fig. 3: den Gegenstand der Figur 1 nach Abschluss der Montage.

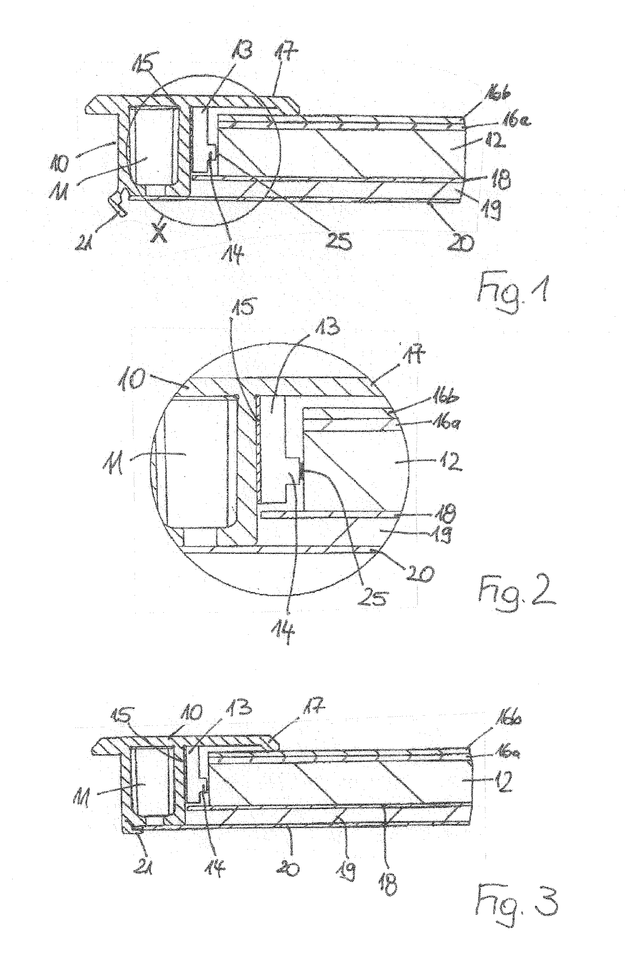

Aus Figur 1 ist zunächst ein äußeres, lichtundurchlässiges Rahmenprofil 10 des Lichtpanels ersichtlich, welches als Kastenprofil mit einem inneren Hohlraum 11 ausgebildet ist. Mit dem Kastenprofil ist einerseits eine entsprechende Stabilität des Rahmenprofils und damit des den lichttechnischen Aufbau des Lichtpanels haltenden und festlegenden äußeren Rahmens verbunden; andererseits ermöglicht das Kastenprofil eine schraubenlose Herstellung eines rechteckigen äußeren Rahmens mit an dessen Eckbereichen aneinander stoßenden Rahmenprofilen, indem entsprechend ausgestaltete Eckverbinder mit an ihnen ausgebildeten Ansätzen in die Hohlräume 11 der jeweils zu verbindenden Rahmenprofile 10 eingeschoben werden.

Soweit Hauptbestandteil des Lichtpanels ein aus einem transparenten, lichtdurchlässigen Material bestehender und an seinen Längsseiten von dem aus entsprechend miteinander verbundenen Rahmenprofilen 10 gebildeten äußeren Rahmen gehaltener plattenförmiger Köper 12 ist, ist gemäß Figur 1 zwischen einer äußeren Randfläche des plattenförmigen Körpers 12 und der Innenseite des zugeordneten Rahmenprofils 10 eine Platine 13 mit darauf angebrachten Lichtdioden-Chips 14 derart angeordnet, dass die Leuchtdioden-Chips das von ihnen erzeugte Licht seitlich in den plattenförmigen Körper 12 einstrahlen. Dabei ist die Platine 13 zwischen der Randfläche des plattenförmigen Körpers 12 und dem dieser benachbarten Innenseite des Rahmenprofils 10 angeordnet und mittels einer Klebefolie 15 an dem Rahmenprofil 10 befestigt. Aus Montagegründen kann die Klebefolie 15 vorzugsweise als Doppelklebefolie ausgebildet sein, so dass während der Herstellung des Lichtpanels die Klebefolie 15 mit ihrer einen Klebeseite auf die zugeordnete Fläche des Rahmenprofils 10 aufgeklebt wird, während die zur Anbringung der Platine 13 eingerichtete Klebefläche der Klebefolie 15 noch mittels eines Schutzstreifens abgedeckt ist. Damit ist es beispielsweise möglich, ein aus Aluminium bestehendes Rahmenprofil 10 mit der daran bereits angebrachten Klebefolie noch einer Pulverisierung zu unterziehen, wobei die Klebefolie 15 im Gegensatz zur vorherigen Pulverisierung des Aluminiumprofils nicht auf die bereits aufgebrachte Pulverschicht aufzukleben, sondern unmittelbar vor der Pulverisierung auf der Aluminiumoberfläche des Rahmenprofils 10 zu befestigen ist. Nach Abschluss der Pulverisierung kann die die weitere Klebefläche der Klebefolie abdeckende Schutzfolie entfernt und die Platine 13 auf die Klebefolie 15 aufgebracht werden. Vorzugsweise besteht die Klebefolie 15 aus einem wärmeleitenden Material, so dass die beim Betrieb des Lichtpanels auf der Platine 13 entstehende Wärme über die Klebefolie 15 in das aus Aluminium bestehende Rahmenprofil 10 abgeleitet werden kann.

Wie sich aus der Zeichnung weiterhin ergibt, ist zum Schutz der auf der Platine 13 befindlichen Leuchtdioden-Chips 14 zwischen der Oberfläche der Leuchtdioden-Chips 14 und der zugeordneten Randfläche des plattenförmigen Körpers 12 ein geringfügiger Abstand belassen. Damit dieser Abstand auch bei jeder beliebigen Anbringung des Lichtpanels, insbesondere auch bei einer vertikalen Ausrichtung, aufrechterhalten bleibt, sind zwischen dem plattenförmigen Körper 12 und der Platine 13, wahlweise dem Rahmenprofil 10 angeordnete Abstandsstege 25 verbaut, so dass auch bei vertikaler Anbringung des Lichtpanels bzw. bei Montagebewegungen gewährleistet ist, dass der plattenförmige Körper 12 nicht gegen die Leuchtdioden-Chips 14 stößt.

Soweit gemäß der in Figur 1 bzw. Figur 2 dargestellten Ansicht die Abstandsstege 25 jeweils zwischen den in einer Reihe bzw. Linie auf der Platine 13 befindlichen Leuchtdioden-Chips 14 angeordnet sind, ist in der Zeichnung jeweils nur der über die Leuchtdioden-Chips 14 hervorstehende Endbereich der Abstandsstege 25 sichtbar. Es ist einsichtig, dass die Abstandsstege 25 auf der Platine 13 jeweils zwischen den reihenartig angeordneten Leuchtdioden-Chips angeordnet sind, so dass im Regelfall jeder Leuchtdioden-Chip durch zwei ihn einrahmende, den plattenförmigen Körper 12 von einem Kontakt mit den Leuchtdioden-Chips 14 abhaltende Abstandsstege 25 geschützt ist.

Wie sich aus der nachstehenden Beschreibung des weiteren Aufbaus des Lichtpanels ergibt, liegt der plattenförmige Körper 12 nicht symmetrisch innerhalb des von den ihn umschließenden Rahmenprofilen 10 gebildeten äußeren Rahmens, so dass auch die Leuchtdioden-Chips 14 auf der Platine 13 in einer entsprechenden asymmetrischen Lage angeordnet sind derart, dass die Leuchtdioden-Chips 14 seitlich im Bereich der Mittenlinie des plattenförmigen Körpers 12 in diesen einstrahlen.

Wie nicht weiter dargestellt, ist es bei der Ausbildung des Lichtpanels mit einer quadratischen Abmessung von beispielsweise 30 cm x 30 cm ausreichend, wenn an zwei gegenüberliegenden Randflächen des plattenförmigen Körpers 12 jeweils eine Platine 13 mit Leuchtdioden-Chips 14 angeordnet ist. Bei einer größeren Abmessung des Lichtpanels mit beispielsweise 60 cm x 60 cm ist vorgesehen, dass allen vier Randflächen des plattenförmigen Körpers 12 entsprechende Platinen 13 mit Leuchtdioden-Chips 14 zugeordnet sind. Sollen die erfindungsgemäßen Lichtpanels rechteckig ausgebildet sein, kann vorgesehen sein, an den längeren Längsseiten des plattenförmigen Körpers 12 auch mehrere Platinen 13 in einer Flucht anzuordnen, wobei in einem solchen Fall beispielsweise Abstandsstege 25 zwischen zwei Platinen 13 angeordnet sein und sich somit gegen das zugeordnete Rahmenteil 10 abstützen können.

Zur Verbesserung der Homogenität des von dem plattenförmigen Körper 12 abgestrahlten Lichts ist auf dessen lichtabstrahlender Oberfläche in an sich bekannter Weise wenigstens eine Lentikularfolie 16 mit einer darin eingebrachten Prismenstruktur aufgelegt. Erfindungsgemäß sind bei dem in der Zeichnung dargestellten Ausführungsbeispiel zwei Lentikularfolien 16a und 15b mit einer jeweils gleichen Prismenstruktur, jedoch in einer um 90 Grad zueinander gedrehten Anordnung aufgelegt.

Die Montage des in der Zeichnung eingelegten Lichtpanels vollzieht sich dabei so, dass in den von den umlaufend angeordneten und mittels nicht dargestellter Eckverbinder miteinander verbundenen Rahmenteilen 10 gebildeten äußeren Rahmen von der Unterseite des Lichtpanels her (entsprechend von der Unterseite der Zeichnungsdarstellung her) zunächst die Lentikularfolien 16a, 16b in den Rahmen eingelegt werden, wobei die Rahmenprofile 10 jeweils einen nach innen vorspringenden Halteschenkel 17 aufweisen, auf welchem die in den Rahmen eingelegten Lentikularfolien 16a, 16b aufliegen. Anschließend wird der plattenförmige Körper 12 eingelegt, wobei er sich zwischen den jeweils vorgesehenen Abstandsstegen 25 zentriert. Auf die Unterseite des plattenförmigen Körpers 12 wird eine Sperrfolie 18 aufgelegt, so dass das von den Leuchtdioden-Chips 14 seitlich in den plattenförmigen Körper 12 eingestrahlte Licht an der Unterseite des plattenförmigen Körpers nicht austreten kann, vielmehr von der Sperrfolie 16 in den plattenförmigen Körper 12 zurückreflektiert wird. Zum Schutz der Anordnung des plattenförmigen Körpers 12 in dem äußeren Rahmen bei Handhabung des Lichtpanels ist auf die Sperrfolie 18 eine Schicht aus Dämpfungsmaterial 19, vorzugsweise eine Schaumstoffschicht, aufgelegt, bevor als Abschluss des Aufbaus des Lichtpanels eine Bodenplatte 20 auf die Dämpfungsmaterialschicht 19 aufgelegt ist.

Wie sich aus einem Vergleich der Figuren 1 und 2 entnehmen lässt, weist das Rahmenprofil 10 bei dem dargestellten Ausführungsbeispiel eine im wesentlichen C-förmige Gestalt mit dem oberen Halteschenkel 17 und einem gegenüberliegenden Schenkel 21 auf, wobei die C-förmige Gestalt insofern asymmetrisch ausgebildet ist, als der untere Schenkel 21 nicht die gleiche Länge aufweist wie der Halteschenkel 17. Als Besonderheit ist anzumerken, dass während der vorstehend beschriebenen Montage durch Einlegen der einzelnen Bestandteile des Lichtpanels der Schenkel 21 weggeklappt ist und erst nach dem Einlegen der vorstehend beschriebenen Teile in den Rahmen auf die Bodenplatte 20 aufgeklappt wird und dadurch die Bodenplatte 20 an dem Rahmen festlegt, wodurch die Bestandteile des Lichtpanels zwischen den beiden Schenkeln 17 und 21 des Rahmenprofils 10 eingeklemmt sind. Mit dieser Ausgestaltung ist der besondere Vorteil einer schraubenlosen Ausbildung des von den einzelnen Rahmenprofilen 10 gebildeten äußeren Rahmens 10 verbunden, ferner der Vorteil, dass eine einfache Manipulation des Lichtpanels bzw, dessen Aufbaus verhindert ist, eben weil das Lichtpanel nicht ohne weiteres, jedenfalls nicht unbemerkt demontierbar ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Lichtpanel mit einem plattenförmigen, aus einem transparenten lichtdurchlässigen Material bestehenden Körper (12), bei welchem an wenigstens einer Randfläche des plattenförmigen Körpers (12) eine Platine (13) mit einer Mehrzahl von darauf angeordneten und entsprechend verschalteten Leuchtdioden-Chips (14) derart angeordnet ist, dass die Leuchtdioden-Chips (14) das von ihnen erzeugte Licht seitlich in den plattenförmigen Körper (12) einstrahlen, **dadurch gekennzeichnet, dass** die Platine (13) zwischen der Randfläche des plattenförmigen Körpers (12) und einem den plattenförmigen Körper (12) umlaufend umschließenden, aus einem lichtundurchlässigen Material bestehenden Rahmenprofil (10) angeordnet ist, welches den plattenförmigen Körper (12) an dessen sichtbarer, lichtabstrahlender Oberfläche mit einem darauf aufliegenden Halteschenkel (17) übergreift, wobei der plattenförmige Körper (12) auf seiner der lichtabstrahlenden Oberfläche gegenüberliegenden Seite von einer von einem Schenkel (21) des Rahmenprofils (10) gehaltenen Bodenplatte (20) festgelegt ist und zwischen dem plattenförmigen Körper (12) und der Bodenplatte (20) eine den plattenförmigen Körper (12) gegen die Bodenplatte (20) abschirmende lichtundurchlässige Sperrfolie (18) und zwischen der Sperrfolie (18) und der Bodenplatte (20) eine Schicht aus Dämpfungsmaterial (19) angeordnet sind und dass zwischen der Platine (13) und dem plattenförmigen Körper (12) Abstandsstege (25) mit einer mindestens der Höhe der auf der Platine (13) aufgebrachten Leuchtdioden-Chips (14) entsprechende Länge angeordnet sind.

2. Lichtpanel nach Anspruch 1, **dadurch gekennzeichnet, dass** das Rahmenprofil (10) ein C-Profil ist und die einander gegenüberliegenden Schenkel (17, 21) des C-Profils einerseits die Bodenplatte (20) und andererseits den plattenförmigen Körper (12) zwischen sich aufnehmen und halten.

3. Lichtpanel nach Anspruch 1 oder 2, **dadurch gekennzeichnet, dass** die Platine (13) auf der Innenseite des C-förmigen Rahmenprofils (10) angebracht ist.

4. Lichtpanel nach Anspruch 3, **dadurch gekennzeichnet, dass** die Platine (13) mittels einer wärmeleitfähigen Klebefolie (15) auf die Innenseite des C-förmigen Rahmenprofils (10) aufgeklebt ist,

5. Lichtpanel nach einem der Ansprüche 1 bis 4, **dadurch gekennzeichnet, dass** an zwei einander gegenüberliegenden Randflächen des plattenförmigen Körpers (12) je eine Platine (13) mit seitlich in den plattenförmigen Körper (12) einstrahlenden Leuchtdioden-Chips (14) angeordnet ist.

6. Lichtpanel nach einem der Ansprüche 1 bis 4, **dadurch gekennzeichnet, dass** an allen vier Randflächen eines rechteckigen plattenförmigen Körpers (12) jeweils eine Platine (13) mit seitlich in den plattenförmigen Körper (12) einstrahlenden Leuchtdioden-Chips (14) angeordnet ist.

7. Lichtpanel nach einem der Ansprüche 1 bis 6, **dadurch gekennzeichnet, dass** die sichtbare lichtabstrahlende Oberfläche des plattenförmigen Körpers (12) mit einer eine Prismenstruktur aufweisenden Lentikularfolie (16) belegt ist.

8. Lichtpanel nach Anspruch 7, **dadurch gekennzeichnet, dass** zwei Lentikularfolien (16a, 16b) mit gleicher Prismenstruktur um einen Winkel versetzt zueinander aufeinander gelegt sind.

9. Lichtpanel nach einem der Ansprüche 1 bis 8, **dadurch gekennzeichnet, dass** auf der Platine (13) zusätzlich zu den Leuchtdioden-Chips (14) wenigstens eine damit verschaltete und an eine Stromversorgung angeschlossene Stromquelle angeordnet ist.

10. Lichtpanel nach einem der Ansprüche 1 bis 9, **dadurch gekennzeichnet, dass** auf den Platinen (13) ein Weißlicht erzeugende Leuchtdioden-Chips (14) angeordnet sind.

11. Lichtpanel nach Anspruch 10, **dadurch gekennzeichnet, dass** auf jeweils einer Platine (13) ein Weißlicht mit unterschiedlichen Farbtemperaturen erzeugende Leuchtdioden-Chips (14) angeordnet sind.

12. Lichtpanel nach Anspruch 11, **dadurch gekennzeichnet, dass** auf jeweils einer Platine (13) Leuchtdioden-Chips (14) zur Erzeugung eines Weißlichts mit einer Farbtemperatur von 2900 K und solche zur Erzeugung eines Weißlichts mit 6500 K angeordnet sind.

13. Lichtpanel nach Anspruch 12, **dadurch gekennzeichnet, dass** den Leuchtdioden-Chips (14) ein Steuermodul zur stufenlosen Mischung des von den Leuchtdiode (14) mit einer jeweils unterschiedlichen Farbtemperatur abgestrahlten Weißlichts zugeordnet ist.

14. Lichtpanel nach einem der Ansprüche 1 bis 9, **dadurch gekennzeichnet, dass** auf einer Platine (13) eine Mischung von jeweils Licht in unterschiedlichen Farben erzeugende und mittels eines Steuermoduls ansteuerbare Leuchtdioden-Chips (14) angeordnet sind.

15. Lichtpanel nach einem der Ansprüche 1 bis 14, **dadurch gekennzeichnet, dass** der plattenförmige Körper (12) aus Acryl mit darin verteilt eingelagerten Streuzentren besteht.
